# EUROPEAN PATENT APPLICATION

(11) **EP 1 118 853 A1**
(43) Date of publication of application: **25.07.2001**
(21) Application number: 00300395.1
(22) Date of filing: 20.01.2000
(51) Int. Cl.: G01N 21/35, G01N 21/71

(54) **Material Analysis**

(71) Applicant: BRITISH AEROSPACE PUBLIC LIMITED COMPANY, Farnborough, Hants. GU14 6YU (GB)
(72) Inventor: The designation of the inventor has not yet been filed
(74) Representative: Edis, Ronald Malcolm

(57) **Abstract**

Material analysis apparatus and method, particularly of use in detecting barely visible impact damage but also of use to detect other material imperfections. The apparatus includes a function generator which provides a sinusoidal signal to an ultrasonic amplifier as well as to a PC. The PC is connected to an infrared camera. The sinusoidal signal is fed into the amplifier and causes two probes attached to the sample of material to emit ultrasonic energy at the modulated frequency. Ultrasonic energy from the two probes then enters the sample by means of mechanical coupling and an image of the resulting thermal radiation is captured by the infrared camera and transferred to the PC for further processing and analysis.

## Description

The present invention relates to material analysis.

Known methods of material analysis include using an intensity modulated ultrasonic source to measure material properties. In such prior art systems, a single ultrasonic probe operating at a single frequency is aimed towards a sample of a material. The resulting vibrations through the sample are measured in order to obtain data about the sample.

The known ultrasonic material analysis apparatus uses only one ultrasonic transducer operating at a single frequency with an amplitude modulated by a second frequency and using intensity detectors to obtain a reading of ultrasonic absorption. However, this approach results in standing waves being set up in the sample under inspection and generating hot spots. These hot spots are indistinguishable from damaged areas and so often result in misidentification of damage within the sample. This approach also has the disadvantage that readings can only be obtained for the overall probed area and does not allow finer analysis of sub-regions within the area.

It is also known to use lock-in thermography techniques to analyse materials. This involves aiming a halogen lamp at a sample and modulating the intensity sinusoidally with a known frequency. An infra-red camera then captures a thermal image of a surface of the sample at the modulated frequency.

Whilst these prior art techniques can be useful for several types of material analysis, they are limited in usefulness for detecting barely visible impact damage (BVID) which result in areas of shattered material.

An object of the present invention is to provide a material analysis technique which can produce improved results in detecting barely visible impact damage and other material imperfections.

According to a first aspect of the present invention there is provided apparatus for material analysis including:
means for emitting ultrasonic energy towards a sample material; and
means for capturing a thermal image of the sample.

Preferably, the ultrasonic energy emitting means includes two ultrasonic probes for being attached to the sample. Preferably, the two probes in use emit sonic energy at different respective frequencies. Preferably, the apparatus includes means for modulating the intensity of the sonic energy emitted by each of the probes.

In a preferred embodiment, one of the two probes operates at a frequency of approximately 35kHz and the other operates at a frequency of approximately 40 kHz. Preferably, the modulating means modulates the intensities of the two probes Π/2 out of phase with each other. The modulation frequency may be between 0.01 and 2.0 Hz.

The means for capturing the thermal image may sample at an integer multiple of the modulation frequency, preferably at approximately twice the modulation frequency.

The means for capturing the thermal image preferably includes an infra-red camera.

According to a second aspect of the present invention there is provided a method of material analysis including steps of:
emitting ultrasonic energy towards a material sample; and
capturing a thermal image of the sample.

Preferably, the step of emitting ultrasonic energy towards the sample includes attaching two probes to the sample, the probes being configured to operate at two different respective frequencies. Preferably, the intensities of the two probes are modulated out of phase with each other.

Whilst the invention has been described above it extends to any inventive combination of features set out above or in the following description.

The invention may be performed in various ways, and various embodiments thereof will now be described in detail, reference being made to the accompanying drawings in which:-

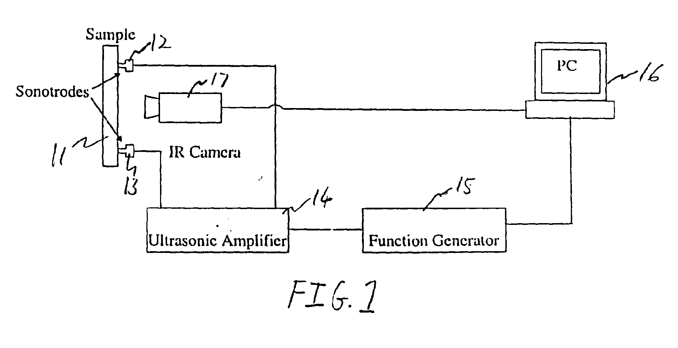

Figure 1 is a schematic view of a preferred embodiment of the present invention.

In Figure 1, a sample 11 of a material to be analysed has two ultrasonic probes (sonotrodes/ultrasonic transducers) 12 and 13 attached to it. The two probes are connected to an ultrasonic amplifier 14. The amplifier 14 is connected to a function generator 15 which provides a sinusoidal signal to the amplifier 14 as well as to a personal computer (PC) 16. The PC 16 is also connected to an infra-red camera 17, which has a lens pointing towards a surface of the sample 11 and is capable of capturing thermal images.

The sinusoidal signal generated by component 15 is fed into the amplifier 14 and causes the two probes 12 and 13 to emit ultrasonic energy at the modulated frequency. Ultrasonic energy from the two probes then enters the sample 11 by means of mechanical coupling and causes the whole component to be set into small amplitude oscillation through material lattice vibrations (phonons). Areas of impact damage, including BVID, dissipate the ultrasonic energy in the form of thermal energy at a higher rate than non-damaged material. The dissipated ultrasonic energy is then transported to the surface of the sample and emitted in the form of thermal radiation. An image of this thermal radiation can then be captured by the infra-red camera 17 and transferred to the PC 16 for further processing and analysis.

The use of the two ultrasonic probes 12 and 13 operating at different respective frequencies means that problems resulting from standing wave generation are minimised or eliminated. In this example, the operating frequency of the first probe 12 is approximately 35 kHz and the frequency of the second probe 13 is approximately 40 kHz. The intensities of both of the probes are modulated Π/2 out of phase by the frequency generated by the function generator 15. The infrared camera 17 is configured to sample at twice this modulation frequency to perform the thermal image capture. The modulation frequency can be varied, typically in a range between 0.01 and 2.0 Hz.

## Claims

1. Apparatus for material analysis including:
means for emitting ultrasonic energy towards a sample material; and
means for capturing a thermal image of the sample.

2. Apparatus according to Claim 1, wherein the ultrasonic energy emitting means includes two ultrasonic probes for being attached to the sample.

3. Apparatus according to Claim 2, wherein use the two probes emit sonic energy at different respective frequencies.

4. Apparatus according to any one of Claims 2 to 3, wherein one of the probes operates at a frequency of approximately 35 kHz and the other probe operates at a frequency of approximately 40 kHz.

5. Apparatus according any one of the preceding claims, further including means for modulating the intensity of the sonic energy emitted by each of the probes.

6. Apparatus according to Claim 5, wherein the modulating means modulates the intensities of the two probes Π/2 out of phase with each other.

7. Apparatus according to any one of the preceding claims, wherein the means for capturing the thermal image samples at an integer multiple of the modulation frequency.

8. Apparatus according to Claim 7, wherein the means for capturing the thermal image samples at approximately twice the modulation frequency.

9. A method of material analysis including steps of:
emitting ultrasonic energy towards a material sample; and
capturing a thermal image of the sample.

10. A method according to Claim 9, wherein the step of emitting ultrasonic energy towards a sample includes attaching two probes to the sample.

11. A method according to Claim 10, wherein the two probes are configured to operate at two different respective frequencies.

12. A method according to Claim 11, wherein the intensities of the two probes are modulated out of phase with each other.
